# EUROPÄISCHE PATENTANMELDUNG

(11) **EP 3 228 881 A1**
(43) Veröffentlichungstag der Anmeldung: **11.10.2017**
(21) Anmeldenummer: 17000052.5
(22) Anmeldetag: 12.01.2017
(51) Int. Cl.: F16B 37/00

(54) **BAUSATZ ZUM VERBINDEN VON BAUTEILEN**

(30) Priorität: 06.04.2016 DE 102016003943
(71) Anmelder: Palfinger Tail Lifts GmbH, 27777 Ganderkesee (DE)
(72) Erfinder: Eike, Rulfs, 27804 Berne (DE)
(74) Vertreter: Möller, Friedrich

(57) **Zusammenfassung**

Um zwei Bauteile miteinander zu verbinden, werden diese oftmals miteinander verschraubt. Wenn es sich bei den Bauteilen um oberflächenbehandelte Teile handelt, gestaltet sich das Schneiden eines Gewindes als problematisch. Die vorliegende Erfindung schafft einen Bausatz (10) zum Verbinden von Bauteilen (11, 12) und eine Einsetzmutter (17), durch die mindestens zwei Bauteile (11, 12) auf eine einfache und zuverlässige Weise miteinander verbindbar sind. Dazu ist es vorgesehen, dass die Einsetzmutter (17) einen unrunden Querschnitt und mindestens einen Vorsprung (27, 28) aufweist, der wenigstens teilweise über den Querschnitt der Einsetzmutter (17) hinausragt, wobei ein erstes Bauteil (11) eine mit der Form des Querschnitts der Einsetzmutter (17) korrespondierende Vertiefung oder einen Durchbruch (13) zur Aufnahme der Einsetzmutter (17) aufweist, die Vertiefung oder der Durchbruch (13) größer ist als der Querschnitt der Einsetzmutter (17) und kleiner ist als der mindestens eine Vorsprung (27, 28), derart dass die Einsetzmutter (17) in der Vertiefung oder dem Durchbruch (13) unverdrehbar ist sowie der Vorsprung (27, 28) sich auf dem ersten Bauteil (11) abstützt.

## Beschreibung

Die Erfindung betrifft einen Bausatz zum Verbinden von Bauteilen gemäß dem Oberbegriff des Anspruchs 1. Des Weiteren betrifft die Erfindung eine Einsetzmutter gemäß dem Anspruch 10.

Um zwei Bauteile miteinander zu verbinden, werden diese oftmals miteinander verschraubt. Dazu wird in eines der Bauteile eine Gewindebohrung geschnitten, in der eine Schraube, welche zuvor durch eine entsprechende Öffnung in dem anderen Bauteil geführt wurde, verschraubt wird.

Wenn es sich bei den Bauteilen um oberflächenbehandelte Teile wie beispielsweise verzinkte Metallbauteile handelt, gestaltet sich das nachträgliche Schneiden eines Gewindes als nachteilig. Durch das Schneiden des Gewindes in ein Bauteil wird die Oberflächenbeschichtung beschädigt bzw. zerstört, wodurch das Bauteil insgesamt anfällig gegenüber beispielsweise Korrosion wird. Andererseits gestaltet sich auch die Oberflächenbehandlung eines Innengewindes als problematisch, da sich durch die Behandlung die Dimensionierung des Gewindes ändern kann.

Davon ausgehend liegt der vorliegenden Erfindung die Aufgabe zugrunde, einen Bausatz zum Verbinden von Bauteilen und eine Einsetzmutter zu schaffen, mit der mindestens zwei Bauteile auf eine einfache und zuverlässige Weise miteinander verbindbar sind.

Ein Bausatz zur Lösung dieser Aufgabe weist die Merkmale des Anspruchs 1 auf. Demnach ist es vorgesehen, dass die Einsetzmutter einen unrunden Querschnitt und mindestens einen Vorsprung aufweist, der wenigstens teilweise über den Querschnitt der Einsetzmutter hinausragt, wobei das erste Bauteil eine mit der Form des Querschnitts der Einsetzmutter korrespondierende Vertiefung oder einen Durchbruch zur Aufnahme der Einsetzmutter aufweist, die Vertiefung oder der Durchbruch größer ist als der Querschnitt der Einsetzmutter und kleiner ist als der mindestens eine Vorsprung, derart dass die Einsetzmutter in der Vertiefung oder dem Durchbruch unverdrehbar ist sowie der Vorsprung sich auf dem ersten Bauteil abstützt. Zum Verbinden der mindestens zwei Bauteile ist eine Schraube durch beide Bauteile führbar und mit der Einsetzmutter, die in der Vertiefung oder dem Durchbruch des ersten Bauteils positionierbar ist, verschraubbar.

Durch das Verschrauben der Schraube bewegt sich die Einsetzmutter gegen eine Innenwandung der Vertiefung bzw. des Durchbruchs. Da das Verdrehen der Einsetzmutter somit blockiert ist, zieht sich die Schraube in der Einsetzmutter fest. Dabei wird der mindestens eine Vorsprung der Einsetzmutter auf eine Oberfläche des ersten Bauteils gezogen, wodurch die mindestens zwei Bauteile miteinander verbunden bzw. verschraubt werden.

Durch die Verwendung dieses Bausatzes bzw. der Einsetzmutter muss somit kein Gewinde in eines der zu verbindenden Bauteile geschnitten werden. Da sich die Einsetzmutter in dem ersten Bauteil selbst festzieht, ist auch kein weiteres Werkzeug für die Verschraubung des Bausatzes notwendig. Da die Einsetzmutter lose in die Vertiefung bzw. in den Durchbruch gesetzt wird, ist die Einsetzmutter nach Lösen der Verbindung aus der Vertiefung bzw. aus dem Durchbruch zu entnehmen und wiederverwendbar.

Insbesondere sieht es die vorliegende Erfindung weiter vor, dass die Einsetzmutter zwei, vorzugsweise mehrere, Vorsprünge aufweist, die gegenüberliegend, insbesondere sternartig, an der Einsetzmutter angeordnet sind. So ist es beispielsweise vorstellbar, dass die Einsetzmutter an einer Seite einen durchgehenden Kragen aufweist, der sich beim Verschrauben der Einsetzmutter mit der Schraube gegen die Oberfläche bzw. Oberseite des ersten Bauteils zieht. Alternativ ist es erfindungsgemäß jedoch auch vorgesehen, dass die Einsetzmutter eine Vielzahl von Vorsprüngen aufweist, die sternartig an einer Seite der Einsetzmutter positioniert sind und jeweils beim Verschrauben gegen die Oberfläche bzw. Oberseite des ersten Bauteils gezogen werden.

Je nach Anforderungen an die Verbindung der Bauteile und die Bauteile selbst, kann die Einsetzmutter mit einer anderen Anzahl von Vorsprünge ausgebildet sein.

Bevorzugt sieht es die vorliegende Erfindung weiter vor, dass der mindestens eine Vorsprung der Einsetzmutter wenigstens größtenteils über die Vertiefung oder den Durchbruch des ersten Bauteils herausragt. Durch die Fläche des Vorsprungs, mit der die Einsetzmutter über die Vertiefung bzw. den Durchbruch hinausragt, wird die Auflagefläche des mindestens einen Vorsprungs auf dem ersten Bauteil bestimmt. Je größer die Auflagefläche des mindestens einen Vorsprungs auf dem ersten Bauteil ist, desto mehr Kraft kann von der Einsetzmutter auf das erste Bauteil übertragen werden und desto fester können die Bauteile miteinander verbunden werden.

Ein weiteres vorteilhaftes Ausführungsbeispiel der vorliegenden Erfindung kann es vorsehen, dass zwei gegenüberliegende Vorsprünge der Einsetzmutter über den Querschnitt der Einsetzmutter hinausragen und zwei quer dazu ausgerichtete gegenüberliegende Vorsprünge zumindest abschnittsweise gleich dem Querschnitt der Einsetzmutter sind. Somit kann der mindestens eine Vorsprung zumindest bereichsweise der Form des Querschnitts der Einsetzmutter folgen. Durch diese wenigstens teilweise Fortführung der Querschnittsform der Einsetzmutter in dem mindestens einen Vorsprung lässt sich die Einsetzmutter besonders einfach handhaben, da bereits beim Ergreifen die Orientierung eindeutig gegeben ist, in der die Einsetzmutter in der Vertiefung bzw. in den Durchbruch des ersten Bauteils eingesetzt werden muss.

Ein weiteres Ausführungsbeispiel der Erfindung kann es vorsehen, dass die Vertiefung in dem ersten Bauteil mindestens der Höhe der Einsetzmutter entspricht oder kleiner als die Höhe der Einsetzmutter ist. Alternativ kann es vorgesehen sein, dass die Höhe der Einsetzmutter genau der Höhe der Vertiefung entspricht, sodass beim Verschrauben die Einsetzmutter in der Vertiefung aufsitzt. Es ist auch denkbar, dass die Vertiefung wesentlich tiefer ist als die Höhe der Einsetzmutter, sodass die Einsetzmutter in der Vertiefung nur mit der Innenfläche der Vertiefung in Kontakt gerät.

Vorzugsweise kann es weiter vorgesehen sein, dass der Querschnitt der Einsetzmutter polygonal, insbesondere rautenförmig, ist. Weitere polygonale Formen wie ein Trapez, ein Dreieck, ein Viereck oder ein Sechseck sind, denkbar. Je nach Anforderungen an die Verschraubung, die durch die Art und Beschaffenheit der Bauteile vorgegeben wird, kann die Form des Querschnitts der Einsetzmutter abweichen.

Weiter ist es denkbar, dass die Ecken der Einsetzmutter, insbesondere des polygonalen Querschnitts, abgerundet sind. Diese Abrundung gestaltet sich als besonders vorteilhaft, da durch die abgerundeten Ecken der Einsetzmutter beim Verschrauben der Einsetzmutter in der Vertiefung oder dem Durchbruch die Innenfläche der Vertiefung bzw. des Durchbruchs nicht durch scharfe Kanten der Einsetzmutter beschädigt wird.

Insbesondere kann es vorgesehen sein, dass zum Verbinden der mindestens zwei Bauteile die Schraube durch beide Bauteile führbar ist und mit der Einsetzmutter, die in der Vertiefung oder dem Durchbruch des ersten Bauteils positionierbar ist, verschraubbar ist, wobei die Vertiefung der dem zweiten Bauteil abgewandten Seite des ersten Bauteils zugeordnet ist. Auf diese Weise lassen sich nahezu beliebig viele Bauteile miteinander verbinden bzw. verschrauben, ohne dass ein Gewinde in ein Bauteil geschnitten werden muss und ohne dass ein Bauteil beim Verschrauben einen mechanischen Schaden erleidet.

Eine weitere Lösung der eingangs genannten Aufgabe wird durch den Anspruch 10 beschrieben. Demnach ist eine Einsetzmutter zum Verschrauben von mindestens zwei Bauteilen vorgesehen, die mindestens eines der vorgenannten Merkmale aufweist.

Ein bevorzugtes Ausführungsbeispiel der Erfindung wird nachfolgend anhand der Zeichnung näher erläutert. In dieser zeigen:
- Fig. 1: ein Schnitt durch eine schematische Darstellung des Bausatzes,
- Fig. 2: ein horizontaler Schnitt durch den in Fig. 1 dargestellten Bausatz,
- Fig. 3: eine perspektivische Darstellung einer Einsetzmutter,
- Fig. 4: eine perspektivische Ansicht der Einsetzmutter,
- Fig. 5: eine Sicht auf die Einsetzmutter,
- Fig. 6: eine Seitenansicht der Einsetzmutter, und
- Fig. 7: eine weitere Seitenansicht der Einsetzmutter.

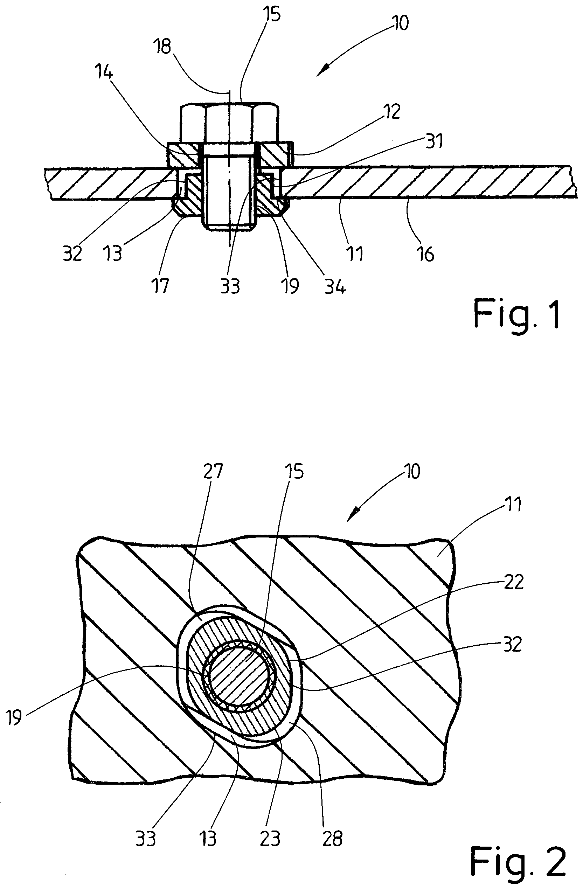

In der Fig. 1 ist ein Schnitt durch eine schematische Darstellung eines Bausatzes 10 dargestellt. Der in der Fig. 1 dargestellte Bausatz 10 weist ein erstes Bauteil 11 und ein zweites Bauteil 12 auf, die miteinander verbunden bzw. verschraubt sind. Die Form der hier dargestellten Bauteile 11, 12 ist nur beispielhaft, und kann von dieser abweichen.

Das erste Bauteil 11 weist in dem hier dargestellten Ausführungsbeispiel einen Durchbruch 13 auf. Erfindungsgemäß ist es allerdings auch vorgesehen, dass es sich bei diesem Durchbruch 13 alternativ um eine Vertiefung mit einer zentralen Bohrung handelt. Das zweite Bauteil 12 weist eine Bohrung 14 auf. Sowohl die Bohrung 14 als auch der Durchbruch 13 sind derart dimensioniert, dass eine Schraube 15 durch die beiden Öffnungen hindurchführbar ist. Bei dieser Schraube 15 kann es sich beispielsweise um eine Sechskantschraube, eine Schlitzschraube, eine Kreuzschlitzschraube oder dergleichen handeln.

Zum Verbinden der beiden Bauteile 11, 12 wird die Schraube 15 mit einer auf der dem zweiten Bauteil 12 gegenüberliegenden Seite 16 des ersten Bauteils 11 angeordneten Einsetzmutter 17 verschraubt. Dabei sind die Schraube 15, die Einsetzmutter 17, die Bohrung 14 sowie die Schraube 15 vorzugsweise auf einer gemeinsamen Achse 18 angeordnet.

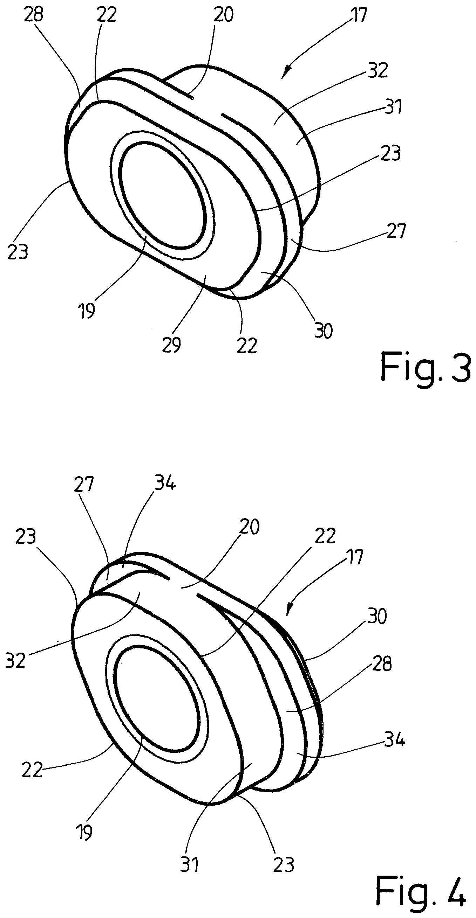

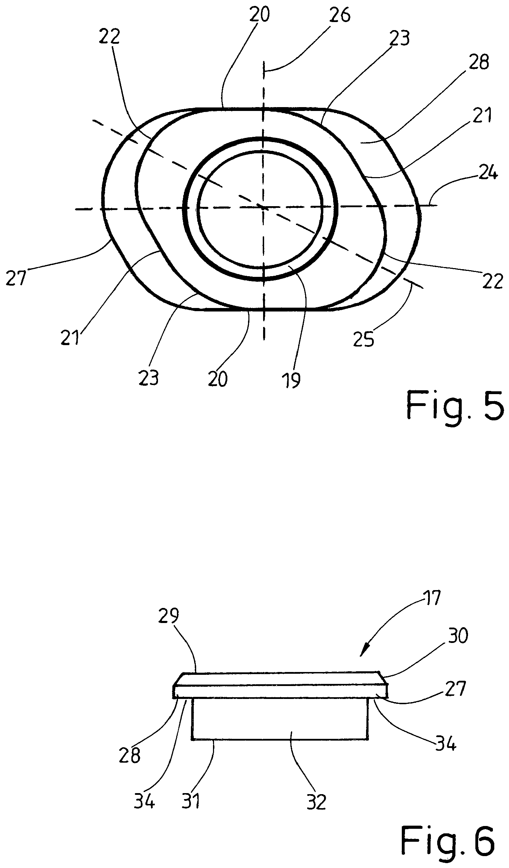

Die Einsetzmutter 17 weist ein Innengewinde 19 auf, welches dem Gewinde der Schraube 15 entspricht. Die Einsetzmutter 17 ist in ihrem Querschnitt unrund (Fig. 3, Fig. 4). Bei dem hier dargestellten Ausführungsbeispiel ist der Querschnitt der Einsetzmutter 17 trapezartig, wobei jeweils zwei gegenüberliegende Seitenkanten 20, 21 wenigstens bereichsweise parallel sind (Fig. 5).

Die Ecken 22, 23 der trapezförmigen Einsetzmutter 17 sind stark abgerundet. Der Winkel zwischen einer Längsachse 24 und einer Diagonalachse 25 beträgt 10° bis 40°, insbesondere 30° (Fig. 5). Darüber hinaus ist das hier dargestellte Ausführungsbeispiel der Einsetzmutter bezüglich einer Querachse 26 punktsymmetrisch.

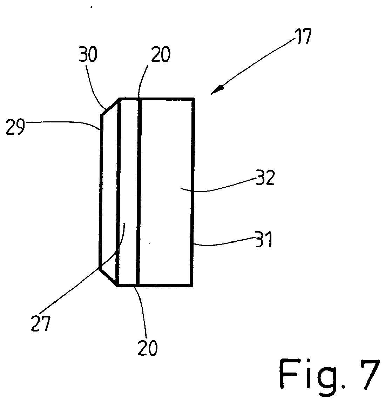

Ein wesentliches Merkmal der hier dargestellten Einsetzmutter 17 sind die beiden Vorsprünge 27, 28, die sich über den Querschnitt der Einsetzmutter 17 erstrecken (Fig. 2). Dabei folgen die Vorsprünge 27, 28 der trapezartigen Form der Einsetzmutter 17, wobei sich die Vorsprünge 27, 28 nur über die Seitenkanten 21 hinauserstrecken. Die Seitenkanten 20 der Einsetzmutter 17 weisen bei dem hier dargestellten Ausführungsbeispiel keine Vorsprünge auf (Fig. 6, Fig. 7). Es ist jedoch genauso denkbar, dass auch die Seitenkanten 20 Vorsprünge aufweisen, die entweder mit den Vorsprüngen 27, 28 einstückig zusammenhängen, oder selbstständige Vorsprünge darstellen.

In Fig. 6 ist eine Seitenansicht der Einsetzmutter 17 entlang der Querachse 26 dargestellt. Bei dieser Ansicht wird besonders deutlich, dass die Vorsprünge 27, 28 über den Querschnitt der Einsetzmutter 17 hinausragen. Die Vorsprünge 27, 28 weisen an ihrer Oberseite 29 einen Absatz 30 auf.

Bei der in Fig. 7 dargestellten Seitenansicht der Einsetzmutter 17 entlang der Längsachse 24 wird ersichtlich, dass die Vorsprünge 27, 28 nicht über die Seitenkanten 20 hinausragen, sondern vielmehr mit diesen abschließen.

Beim Verschrauben der Schraube 15 mit der Einsetzmutter 17 wird die Einsetzmutter 17 mit ihrem unteren Teil 31 in den Durchbruch 13 gesteckt (Fig. 2). Bei dem hier dargestellten Ausführungsbeispiel ist die Höhe des unteren Teils 31 geringer als die Dicke des ersten Bauteils 11 (Fig. 1). Es ist jedoch auch denkbar, dass die Höhe des unteren Teils 31 der Einsetzmutter 17 gleich der Dicke des ersten Bauteils ist. Sodann wird die Schraube 15 durch die Bohrung 14 des zweiten Bauteils 12 gesteckt und mit der Einsetzmutter 17 verschraubt. Dabei kommt es zu einer geringfügigen Verdrehung der Einsetzmutter 17 entlang der Achse 18. Beim Verschrauben der Schraube 15 mit der Einsetzmutter 17 stößt die Mantelfläche 32 des unteren Teils 31 der Einsetzmutter 17 gegen die Innenwandung 33 des Durchbruchs 13. Dadurch wird ein Verdrehen der Einsetzmutter 17 blockiert. Dadurch, dass die Ecken 22, 23 der Einsetzmutter 17 abgerundet sind, wird die Innenwandung 33 des Durchbruchs 13 nicht beschädigt. Durch weiteres Drehen der Schraube 15 wird die Einsetzmutter 17 in Richtung des zweiten Bauteils 12 gezogen. Dieses Anziehen der Einsetzmutter 17 erfolgt solange, bis eine Unterseite 34 der Vorsprünge 27, 28 die Oberfläche 16 des ersten Bauteils 11 kontaktiert. Durch weiteres Anziehen der Schraube 15 wird die Verbindung zwischen dem ersten Bauteil und dem zweiten Bauteil stärker angezogen.

Zum Lösen der Verbindung zwischen dem ersten Bauteil 11 und dem zweiten Bauteil 12 ist die Schraube 15 in entgegengesetzte Richtung zu drehen. Die Einsetzmutter 17 verdreht sich über einen kleinen Winkel entlang der Achse 15, bis sie erneut mit ihrer Mantelfläche 32 gegen die Innenwandung 33 des Durchbruchs 13 stößt. Dies verhindert erneut ein weiteres Verdrehen der Einsetzmutter 17, wodurch ein einfaches Lösen der Bauteile 11, 12 ermöglicht wird.

An dieser Stelle sei darauf hingewiesen, dass neben dem hier dargestellten Ausführungsbeispiel des Bausatzes 10 bzw. der Einsetzmutter 17 noch weitere Ausführungsbeispiele denkbar sind, die beispielsweise einen anderen Querschnitt aufweisen oder verschiedenartig geformte Vorsprünge 27, 28 aufweisen.

### Bezugszeichenliste:

- 10: Bausatz
- 11: erstes Bauteil
- 12: zweites Bauteil
- 13: Durchbruch
- 14: Bohrung
- 15: Schraube
- 16: Oberfläche
- 17: Einsetzmutter
- 18: Achse
- 19: Innengewinde
- 20: Seitenkante
- 21: Seitenkante
- 22: Ecke
- 23: Ecke
- 24: Längsachse
- 25: Diagonalachse
- 26: Querachse
- 27: Vorsprung
- 28: Vorsprung
- 29: Oberseite
- 30: Absatz
- 31: unteres Teil
- 32: Mantelfläche
- 33: Innenwandung
- 34: Unterseite

## Patentansprüche

1. Bausatz (10) mit einem ersten und mindestens einem zweiten Bauteil (11, 12), wobei mindestens eine Verschraubung zum Verbinden der Bauteile (11, 12) vorgesehen ist, die eine Schraube (15) und eine Einsetzmutter (17) aufweist, **dadurch gekennzeichnet, dass** die Einsetzmutter (17) einen unrunden Querschnitt und mindestens einen Vorsprung (27, 28) aufweist, der wenigstens teilweise über den Querschnitt der Einsetzmutter (17) hinausragt, wobei das erste Bauteil (11) eine mit der Form des Querschnitts der Einsetzmutter (17) korrespondierende Vertiefung oder einen Durchbruch (13) zur Aufnahme der Einsetzmutter (17) aufweist, die Vertiefung oder der Durchbruch (13) größer ist als der Querschnitt der Einsetzmutter (17) und kleiner ist als der mindestens eine Vorsprung (27, 28), derart dass die Einsetzmutter (17) in der Vertiefung oder dem Durchbruch (13) unverdrehbar ist sowie der mindestens eine Vorsprung (27, 28) sich auf dem ersten Bauteil (11) abstützt.

2. Bausatz (10) nach Anspruch 1, **dadurch gekennzeichnet, dass** die Einsetzmutter (17) zwei, vorzugsweise mehrere, Vorsprünge (27, 28) aufweist, die gegenüberliegend, insbesondere sternartig, an der Einsetzmutter (17) angeordnet sind.

3. Bausatz (10) nach Anspruch 1 oder 2, **dadurch gekennzeichnet, dass** der mindestens eine Vorsprung (27, 28) der Einsetzmutter (17) wenigstens größtenteils über die Vertiefung oder den Durchbruch (13) des ersten Bauteils (11) hinausragt.

4. Bausatz (10) nach einem der vorhergehenden Ansprüche, **dadurch gekennzeichnet, dass** zwei gegenüberliegende Vorsprünge (27, 28) der Einsetzmutter (17) über den Querschnitt der Einsetzmutter (17) hinausragen und zwei quer dazu ausgerichtete, gegenüberliegende Vorsprünge (27, 28) zumindest abschnittsweise gleich dem Querschnitt der Einsetzmutter (17) sind.

5. Bausatz (10) nach einem der vorhergehenden Ansprüche, **dadurch gekennzeichnet, dass** der mindestens eine Vorsprung (27, 28) zumindest bereichsweise der Form des Querschnittes der Einsetzmutter (17) folgt.

6. Bausatz (10) nach einem der vorhergehenden Ansprüche, **dadurch gekennzeichnet, dass** die Vertiefung in dem ersten Bauteil (11) mindestens der Höhe der Einsetzmutter (17) entspricht oder kleiner als die Höhe der Einsetzmutter (17) ist.

7. Bausatz (10) nach einem der vorhergehenden Ansprüche, **dadurch gekennzeichnet, dass** der Querschnitt der Einsetzmutter (17) polygonal, insbesondere rautenförmig, ist.

8. Bausatz (10) nach einem der vorhergehenden Ansprüche, **dadurch gekennzeichnet, dass** die Ecken (22, 23) der Einsetzmutter (17), insbesondere des polygonalen Querschnitts, abgerundet sind.

9. Bausatz (10) nach einem der vorhergehenden Ansprüche, **dadurch gekennzeichnet, dass** zum Verbinden der mindestens zwei Bauteile (11, 12) die Schraube (12) durch beide Bauteile (11, 12) führbar ist und mit der Einsetzmutter (17), die in der Vertiefung oder dem Durchbruch (13) des ersten Bauteils (11) positionierbar ist, verschraubbar ist, wobei insbesondere die Vertiefung der dem zweiten Bauteil (12) abgewandten Seite (16) des ersten Bauteils (11) zugeordnet ist.

10. Einsetzmutter (10) zum Verschrauben von mindestens zwei Bauteilen (11, 12) gemäß einem der Ansprüche 1 bis 9.
